# EUROPEAN PATENT SPECIFICATION

(11) **EP 1 481 361 B1**
(45) Date of publication and mention of the grant of the patent: **18.07.2007**
(21) Application number: 03714933.3
(22) Date of filing: 27.02.2003
(51) Int. Cl.: G06K 15/00, G06K 15/12

(54) **METHOD FOR RENDERING TWO OUTPUT FORMATS SIMULTANEOUSLY**
VERFAHREN ZUR SIMULTANEN DARSTELLUNG MITTELS ZWEIER FORMATE
PROCEDE DE RENDU SIMULTANE DE DEUX FORMATS DE SORTIE

(30) Priority: 28.02.2002 EP 02100203; 18.04.2002 US 373514 P
(43) Date of publication of application: 01.12.2004
(73) Proprietor: Agfa Graphics N.V., 2640 Mortsel (BE)
(72) Inventor: DE BIE, Carolus, Agfa-Gevaert, 2640 Mortsel (BE)
(74) Representative: Goedeweeck, Rudi
(86) International application number: PCT/EP2003/050035
(87) International publication number: WO 2003/075215

(56) References cited:
- US-A- 4 679 153
- US-A- 5 625 766
- US-A- 5 946 451
- US-B1- 6 252 676

## Description

### FIELD OF THE INVENTION

The invention relates to printing images, in particular to rendering image data in order to print them.

### BACKGROUND OF THE INVENTION

In order to produce printed matter such as books, newspapers, packaging material and the like, the involved image data are usually processed by a pre-press workflow system. Such a pre-press workflow system is disclosed in patent application WO 01/25907. One of the steps in a pre-press process is the rendering process, i.e. the translation of the image data from page description languages like Postscript or PDF to raster data, which are also called bitmap data. The rendering process is performed by a renderer, also known as the Raster Image Processor or RIP. The input data of the renderer are the image data, the output data are the bitmap data. The output data of the renderer are sent to a device such as an imagesetter or a platesetter, which is called in this document the main output device. The output data of the renderer for the main output device are called in this document the main output data. In an imagesetter, by means of the bitmap data a radiation-sensitive film is exposed, that is used to obtain a printing plate. In a platesetter, the printing plate is obtained directly, by exposing a printing plate precursor by means of the bitmap data. The printing plate is then used, e.g. in an offset press, to produce the printed matter. Very often, prior to final output the data are checked by means of a proofing device (also called proofer). The proofing device requires data in another format, e.g. at a lower resolution, than the main output device.

US-A-5 625 766 discloses a software based proofing method allowing to proof and measure registration between the front and the back side of a press sheet by displaying, on a color monitor, both sides superimposed on each other. The data to be displayed is taken from a low resolution raster image processor identical in operation to a full resolution raster image processor used to generate the output for the main output device.

In another prior art implementation, the main output data of the renderer is first stored on disk. In the usual case of color output, the color separation files are stored on a plane by plane basis; typically first the cyan separation is generated by the renderer and stored on disk, followed by magenta, yellow, black and optionally by spot colors. When requesting the proof, the main output data is read from disk (as mentioned, typically data for four color planes and for an additional plane per spot color), the color separations are recombined and the data for the proofing device is generated from the high resolution screened data intended for the main output device.

For more information on proofing, rendering, imposition and other relevant terms, we refer to US-A-5 625 766 mentioned already above.

There is still a need for an improved method for rendering output data in two different formats from input data. US-A-5 946 451 is acknowledged in the preamble of claim 1.

### SUMMARY OF THE INVENTION

The present invention is a method for generating output data in two different output formats as claimed in independent claim 1. The invention also includes a system and a computer program implementing the method. Preferred embodiments of the invention are set out in the dependent claims.

In a method in accordance with the invention, the two output formats are generated virtually simultaneously. The main output data has a format that is typically intended for high resolution, monochrome, binary marking engines, such as imagesetters and platesetters. It is typically 2400 dpi (dots per inch), color separated, screened output. The format of the generated auxiliary output data is typically used for proofers; it may be 720 dpi, contone, color managed, composite. Both formats are generated at the same time.

An advantage of the invention is that the performance of the system is significantly improved. This is especially important because formats of imaging devices are increasingly getting larger and larger. The invention allows to maintain acceptable throughputs on standard hardware, and to obtain higher throughputs on faster hardware.

Moreover, only one renderer is required, whereas the method disclosed in US-A-5 625 766, mentioned above, requires two different renderers, a low resolution one and a full resolution one.

Preferably, the data for the proofing device are generated from the high resolution screened data intended for the main output device, by processing the screened data; this may involve descreening, zooming, color managing the screened data. This offers the advantage that the proofer data are completely consistent with the main output data.

Further advantages and embodiments of the present invention will become apparent from the following description and drawing.

### BRIEF DESCRIPTION OF THE DRAWINGS

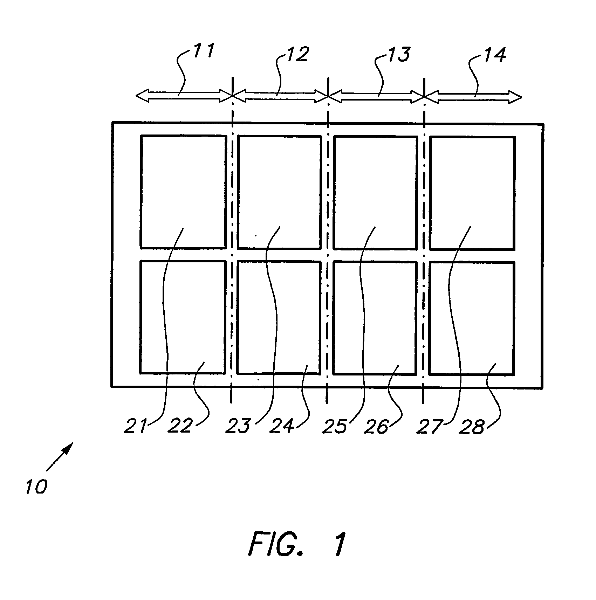

The invention is described with reference to Fig. 1, which is used to illustrate an embodiment in accordance with the invention.

### DETAILED DESCRIPTION OF THE INVENTION

In a preferred embodiment of the invention, the output data of the renderer is divided into a plurality of bands. This is illustrated by means of Fig. 1. Fig. 1 shows output page data 21-28 of eight pages that will be printed on a single sheet by an offset press. If e.g. a leaflet is printed, customarily several pages of the leaflet are printed on a single, large sheet and they are arranged, by a process called imposition, in such a way that after printing, folding and possibly cutting the order of the pages in the final product is correct. The single large sheet is, in imposition terminology, called the flat. The output data 10 that correspond to the flat can have a very large size, especially after the screening step. In the embodiment illustrated by means of Fig. 1, a plurality of bands 11-14 constitute the output data 10, in such a way that each band 11-14 contains output page data 21-28 of two adjoining pages, e.g. band 11 contains page data 21 and 22. In general, a band may cross page borders. Usually, a band will be much smaller than a page; the size of a band may be determined by the available amount of memory in the renderer. In general, a band 11-14 covers a subset of the output data 10, so that all output data 10 belong to exactly one of the bands 11-14 and so that the data of all bands 11-14 together constitute the output data. The output data can also be divided into a plurality of bands if no pages are used, such as for packaging applications where the output data contain basic data that are replicated via a so-called step-and repeat operation.

Preferably, the invention is implemented by means of a special mode in the renderer that allows for the generation of bands. E.g. the CPSI renderer from Adobe can be configured in such a way that, instead of generating, as is customary, a whole color separation, color per color, the output data are generated for a first band for all different colors, then for a second band for all different colors, and so on; the band size can also be configured. A particular embodiment of the invention for color output is as follows. Initially, a first band of cyan is generated, followed by a first band of magenta, a first band of yellow, a first band of black, and optionally first bands for each separated spot color. After all the separations for the first band are generated in memory, the proofing processing (recombination, descreening, etc.) starts working on the first band and may store the processed proofing data on disk, or, alternatively, send it immediately to the proofer. Then, the process is repeated to generate a second band, and so on until all data are generated.

Preferably, the output data as generated by the renderer for the successive bands are appended to each other, for each color, and the appended data are sent to the main output device, so that the main output device receives a set of appended data for each color.

The data in the second output format, intended for a proofing device, are generated from the data in the first output format for the main output device, band per band; this can be performed in different ways. In a first embodiment, generating the data in the second output format includes resampling the data in the first output format, as described e.g. in EP-A-1 139 654. In this document a technique is described to convert a set of N binary halftoned color separations that are to be proofed pixel by pixel into a continuous tone image having M colorant components that correspond with M inks of a proofing device. The method is based on the Neugebauer color mixing model as it is known in the art. A combination of N binary colorant values corresponding to a pixel in the set of separations that is to be proofed is transformed into a set of M continuous tone colorant values that yield the same color for said pixel. The method is implemented by means of a look-up table with 2^{N} entries that correspond with combinations of 0% and 100% ink of said first set of colorants. For each entry, the table contains values between 0% and 100% representing amounts of said second set of colorants that match the color produced by the combination of said first set binary colorants.

In a second embodiment, generating the data in the second output format includes descreening the data in the first output format, i.e. the binary, screened data in the first output format are converted to a contone value. This can be illustrated by the following very simple example, wherein the data in the first output format are 2400 dpi and those in the second format 600 dpi. The 2400 dpi binary data are divided in squares of sixteen bits, i.e. 4x4 bits. Suppose that in a square of 4x4 bits four bits are set, i.e. have a value 1, and twelve bits are zero. The contone value for this square is then 256*4/16 = 64 = (40)_{HEX} in hexadecimal. This is then repeated for the next square of 4x4 bits.

Possibly, an additional action is performed in the border area between a first band and a second band, adjoining to the first one, in order to ensure a correct transition between both bands for the data in the second output format. Data in the first output format for the border area may then be stored, preferably in memory, to calculate the data in the second output format in the border area. In the very simple example discussed above, if the border between the first and the second band does not coincide with sides of the 4x4 squares (but divides e.g. those squares in halves), then, when processing the first band, the data in the first output format of those squares on the border may be stored temporarily, and used subsequently in calculating the data in the second output format for the second band.

The data in the second output format may directly be sent to the proofer, e.g. band per band, or they may be stored, e.g. on disk.

The invention is not limited to the embodiments described above. In case of color output, other colors may be used; the order of the colors may arbitrary. The invention is also applicable to black-and-white output. The invention may also be applied to other devices than a main output device and a proofer.

Having described in detail preferred embodiments of the current invention, it will now be apparent to those skilled in the art that numerous modifications can be made therein without departing from the scope of the invention as defined in the appending claims.

### List of reference signs

- 10 :: output data
- 11 :: band
- 12 :: band
- 13 :: band
- 14 :: band
- 21 :: page data
- 22 :: page data
- 23 :: page data
- 24 :: page data
- 25 :: page data
- 26 :: page data
- 27 :: page data
- 28 :: page data

## Claims

1. A method for rendering input data simultaneously into output data (10) having a first output format and output data (10) having a second output format, the method comprising the steps of:
- defining a plurality of bands (11-14) constituting said output data (10);
- sequentially processing each one of said plurality of bands (11-14), wherein said processing of a band comprises the following two steps:
- generating first output data by means of a renderer from said input data for each of said specific bands (11-14) in said first output format;
- generating from said first output data in said first output format second output data in said second output format; the method being **characterized in that**:
- said first output format is a bitmap suitable for driving a main output device;
- said second output format is a bitmap suitable for driving a proofing device.

2. The method according to claim 1, further including the steps of:
- sending said first output data in said first output format to a main output device;
- sending said second output data in said second output format to a proofing device;

3. The method according to claim 1, wherein said main output device is selected from the group of an imagesetter and a platesetter.

4. The method according to any one of the preceding claims wherein said first output data for said specific band (11-14) comprise data for a plurality of colors.

5. The method according to any one of the preceding claims further comprising the step of:
descreening said first output data for said specific band (11-14).

6. The method according to any one of the preceding claims further comprising the steps of:
- temporarily storing a first portion of said first output data for said specific band (11-14) wherein said first portion adjoins data for another specific band (11-14) out of said plurality of bands;
- using said first portion of said first output data for said specific band (11-14) for connecting said second output data for said specific band to said second output data for said other specific band.

7. The method according to any one of the preceding claims further comprising the step of:
- appending said first output data for each specific band (11-14) out of said plurality of bands (11-14), thus obtaining said output data in said first output format.

8. A system for processing data comprising means carrying out the steps of the method according to any one of claims 1 to 7.

9. The system according to claim 8 when dependent on claim 2, further comprising said main output device.

10. The system according to claim 8 when dependent on claim 2, or according to claim 9, further comprising said proofing device.

11. A computer program comprising computer program code means adapted to perform the steps of the method according to any one of claims 1 to 7 when said program is run on a computer.

12. A computer readable medium comprising program code adapted to carry out the method according to any one of claims 1 to 7 when run on a computer.

## Patentansprüche

1. Ein Verfahren, um Eingabedaten gleichzeitig in Ausgabedaten (10) in einem ersten Ausgabeformat und Ausgabedaten (10) in einem zweiten Ausgabeformat wiederzugeben, wobei das Verfahren folgende Schritte umfasst :
- Definieren mehrerer Bänder (11-14), die gemeinsam die Ausgabedaten (10) verkörpern,
- sequentielle Verarbeitung jedes der mehreren Bänder (11-14),
wobei die Verarbeitung eines Bandes die folgenden zwei Schritte umfasst :
- Erstellen erster Ausgabedaten, die mit Hilfe einer Wiedergabevorrichtung für jedes spezifische Band (11-14) im ersten Ausgabeformat aus den Eingabedaten erstellt werden,
- Erstellen zweiter Ausgabedaten im zweiten Ausgabeformat aus den ersten Ausgabedaten im ersten Ausgabeformat,
wobei das Verfahren **dadurch gekennzeichnet ist, dass**
- das erste Ausgabeformat ein zur Ansteuerung einer Hauptausgabevorrichtung geeignetes Bitmap-Format ist und
- das zweite Ausgabeformat ein zur Ansteuerung eines Proofgeräts geeignetes Bitmap-Format ist.

2. Verfahren nach Anspruch 1, das ferner die folgenden Schritte umfasst :
- Senden der ersten Ausgabedaten im ersten Ausgabeformat an eine Hauptausgabevorrichtung und
- Senden der zweiten Ausgabedaten im zweiten Ausgabeformat an ein Proofgerät.

3. Verfahren nach Anspruch 1, **dadurch gekennzeichnet, dass** die Hauptausgabevorrichtung ein Filmbelichter oder Plattenbelichter ist.

4. Verfahren nach einem der vorstehenden Ansprüche, **dadurch gekennzeichnet, dass** die ersten Ausgabedaten für das spezifische Band (11-14) Daten für mehrere Farben umfassen.

5. Verfahren nach einem der vorstehenden Ansprüche, das ferner folgenden Schritt umfasst :
- Entrastern der ersten Ausgabedaten für das spezifische Band (11-14).

6. Verfahren nach einem der vorstehenden Ansprüche, das ferner die folgenden Schritte umfasst :
- zeitweiliges Speichern eines ersten Teils der ersten Ausgabedaten für das spezifische Band (11-14), wobei dieser erste Teil an Daten für ein anderes spezifisches Band (11-14) aus den mehreren Bändern grenzt, und
- Verwendung des ersten Teils der ersten Ausgabedaten für das spezifische Band (11-14), um die zweiten Ausgabedaten für das spezifische Band an die zweiten Ausgabedaten für das andere spezifische Band anzukoppeln.

7. Verfahren nach einem der vorstehenden Ansprüche, das ferner folgenden Schritt umfasst :
- Anhängen der ersten Ausgabedaten für jedes spezifische Band (11-14) aus den mehreren Bändern (11-14), wodurch die Ausgabedaten im ersten Ausgabeformat erhalten werden.

8. Ein Datenverarbeitungssystem, das Mittel zur Ausführung der Schritte des Verfahrens nach einem der Ansprüche 1 bis 7 umfasst.

9. System nach Anspruch 8, soweit abhängig von Anspruch 2, das ferner die Hauptausgabevorrichtung umfasst.

10. System nach Anspruch 8, soweit abhängig von Anspruch 2, oder nach Anspruch 9, das ferner das Proofgerät umfasst.

11. Ein Computerprogramm, das Computerprogrammkodemittel umfasst, die bei Verwendung des Programms auf einem Computer die Ausführung der Schritte des Verfahrens nach einem der Ansprüche 1 bis 7 sichern.

12. Ein computerlesbares Medium, enthaltend einen Programmkode, der bei Verwendung auf einem Computer die Ausführung des Verfahrens nach einem der Ansprüche 1 bis 7 sichert.

## Revendications

1. Un procédé destiné à rendre des données d'entrée simultanément sous forme de données de sortie (10) dans un premier format de sortie et de données de sortie (10) dans un deuxième format de sortie, ledit procédé comprenant les étapes ci-après :
- la définition de plusieurs bandes (11-14) constituant ensemble les données de sortie (10),
- le traitement séquentiel de chacune de ces plusieurs bandes (11-14), ce traitement d'une bande comprenant les deux étapes suivantes :
- la création de premières données de sortie à l'aide d'un dispositif de rendu à partir des données d'entrée et cela pour chaque bande spécifique (11-14) dans le premier format de sortie,
- la création de deuxièmes données de sortie dans le deuxième format de sortie à partir des premières données de sorte dans le premier format de sortie,
le procédé étant **caractérisé en ce que**
- le premier format de sortie est un format bitmap approprié pour commander un dispositif de sortie principal et que
- le deuxième format de sortie est un format bitmap approprié pour commander un dispositif d'épreuvage.

2. Procédé selon la revendication 1, comprenant en outre les étapes suivantes :
- la transmission des premières données de sortie dans le premier format de sortie à un dispositif de sortie principal et
- la transmission des deuxièmes données de sortie dans le deuxième format de sortie à un dispositif d'épreuvage.

3. Procédé selon la revendication 1, **caractérisé en ce que** le dispositif de sortie principal est une unité photo ou une unité d'exposition directe de plaques.

4. Procédé selon l'une quelconque des revendications précédentes, **caractérisé en ce que** les premières données de sortie pour la bande spécifique (11-14) comprennent des données pour plusieurs couleurs.

5. Procédé selon l'une quelconque des revendications précédentes, comprenant en outre l'étape suivante :
- le détramage des premières données de sortie pour la bande spécifique (11-14).

6. Procédé selon l'une quelconque des revendications précédentes, comprenant en outre les étapes suivantes :
- le stockage temporaire d'une première partie des premières données de sortie pour la bande spécifique (11-14), cette première partie avoisinant une autre bande spécifique (11-14) du groupe de plusieurs bandes, et
- l'utilisation de la première partie des premières données de sortie pour la bande spécifique (11-14) afin d'annexer les deuxièmes données de sortie pour la bande spécifique aux deuxièmes données de sortie de l'autre bande spécifique.

7. Procédé selon l'une quelconque des revendications précédentes, comprenant en outre l'étape consistant :
- à annexer les premières données de sortie pour chaque bande spécifique (11-14) du groupe de plusieurs bandes (11-14) afin d'obtenir les données de sortie dans le premier format de sortie.

8. Un système de traitement de données comprenant des moyens servant à exécuter les étapes du procédé selon l'une quelconque des revendications 1 à 7.

9. Système selon la revendication 8, pour autant qu'elle dépende de la revendication 2, comprenant en outre le dispositif de sortie principal.

10. Système selon la revendication 8, pour autant qu'elle dépende de la revendication 2, ou selon la revendication 9, comprenant en outre le dispositif d'épreuvage.

11. Un logiciel comprenant des moyens de code de logiciel appropriés pour assurer l'exécution des étapes du procédé selon l'une quelconque des revendications 1 à 7 lorsque le logiciel est utilisé sur un ordinateur.

12. Un moyen assimilable par ordinateur comprenant un code de programme qui, lorsqu'il est utilisé sur un ordinateur, est approprié pour assurer l'exécution du procédé selon l'une quelconque des revendications 1 à 7.
